# EUROPÄISCHE PATENTANMELDUNG

(11) **EP 4 703 965 A1**
(43) Veröffentlichungstag der Anmeldung: **04.03.2026**
(21) Anmeldenummer: 24197529.1
(22) Anmeldetag: 30.08.2024
(51) Int. Cl.: G06K 7/10

(54) **RFID-VERFAHREN, RFID-VORRICHTUNG ZUM DURCHFÜHREN DES RFID-VERFAHRENS SOWIE COMPUTERPROGRAMM-PRODUKT ZUM DURCHFÜHREN EINES TEILS DES RFID-VERFAHRENS**

(71) Anmelder: Siemens Aktiengesellschaft, 80333 München (DE)
(72) Erfinder: Hein, Daniel, 81549 München (DE); Häuser, Markus, 91463 Dietersheim (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

RFID-Verfahren, RFID-Vorrichtung zum Durchführen des RFID-Verfahrens sowie Computerprogramm-Produkt zum Durchführen eines Teils des RFID-Verfahrens

Die Erfindung betrifft ein RFID-Verfahren mit folgenden Verfahrens-Schritten:
a) Aussenden mindestens einer RFID-Sende-Strahlung einer RFID-Sende-Einheit in ein RFID-Sende-Feld hinein, in dem sich eine Vielzahl von RFID-Transpondern befindet,
b) Umwandeln der RFID-Sende-Strahlung in eine RFID-Transponder-Strahlung durch mindestens einen RFID-Transponder, wobei die RFID-Transponder-Strahlung RFID-Transponder-Information zu dem RFID-Transponder enthält,
c) Empfangen der RFID-Transponder-Strahlung durch mindestens eine RFID-Empfangs-Einheit,
d) Einteilen der RFID-Transponder in RFID-Transponder-Gruppen anhand der RFID-Transponder-Informationen der empfangenen RFID-Transponder-Strahlungen,
e) Auswahl eines RFID-Transponder-Gruppen-Repräsentanten mindestens einer der RFID-Transponder-Gruppen,
f) Ermitteln mindestens eines RFID-Transponder-Parameters des RFID-Transponder-Gruppen-Repräsentanten,
g) Zuordnen des RFID-Transponder-Parameters des RFID-Transponder-Gruppen-Repräsentanten zu mindestens einem weiteren Mitglied der RFID-Transponder-Gruppe des RFID-Transponder-Gruppen-Repräsentanten.

Zudem wird eine RFID-Vorrichtung zum Durchführen des RFID-Verfahrens mit
- mindestens einer RFID-Sende-Einheit zum Durchführen des Schritts a) des RFID-Verfahrens,
- mindestens einer RFID-Empfangs-Einheit zum Durchführen des Schritts c) des RFID-Verfahrens und
- mindestens einer RFID-Auswerte-Einheit zum Durchführen zumindest eines der Schritte d) bis g) des RFID-Verfahrens angegeben.

Darüber hinaus wird ein Computerprogramm-Produkt zum Durchführen zumindest eines der Schritte a) bis g) des RFID-Verfahrens angegeben

## Beschreibung

Die Erfindung betrifft ein RFID-Verfahren und eine RFID-Vorrichtung zum Durchführen des RFID-Verfahrens. Darüber hinaus wird ein Computerprogramm-Produkt zum Durchführen eines Teils des RFID-Verfahrens angegeben.

Die Verwendung von hochfrequenten elektromagnetischen (Radio-)Wellen (RFID-Strahlung) zur Identifikation von Objekten und Übertragung von Informationen zwischen RFID-Transpondern ("Tags") und Lesegeräten (RFID-Empfangs-Einheiten) ist eine weitverbreitete Technologie zur Überwachung von Gütern und Waren u.a. in Fabriken, Lagerhäusern oder Logistikzentren. Dazu wird die RFID-Strahlung (RFID-Sende-Strahlung) von einem RFID-Sender aus in ein RFID-Sender-Feld ausgesendet, in dem sich die RFID-Transponder befinden. Die RFID-Transponder empfangen die RFID-Sende-Strahlung und wandeln diese in RFID-Transponder-Strahlung (RFID-Transponder-Antworten) um. Die RFID-Transponder-Strahlung, die dann RFID-Informationen (z.B. Informationen über einen Aufenthalt des entsprechenden RFID-Transponders) enthält, wird von einer RFID-Empfangs-Einheit erfasst.

Die Anzahl der RFID-Transponder-Strahlungen, die eine RFID-Empfangs-Einheit pro Zeitabschnitt empfangen und verarbeiten kann, ist dabei begrenzt. Wenn mehr RFID-Transponder-Antworten von der RFID-Empfangs-Einheit empfangen werden, als diese verarbeiten kann, gehen die nicht mehr verarbeitbaren RFID-Transponder-Antworten verloren.

Aufgabe der Erfindung ist es, aufzuzeigen, wie eine Vielzahl von RFID-Transponder-Antworten von RFID-Transpondern, die sich in einem RFID-Sender-Feld befinden, verarbeitet werden können, so dass eine Wahrscheinlichkeit für den Verlust von RFID-Transponder-Antworten niedrig ist.

Zur Lösung der Aufgabe wird ein RFID-Verfahren mit folgenden Verfahrens-Schritten angegeben:
a) Aussenden mindestens einer RFID-Sende-Strahlung einer RFID-Sende-Einheit in ein RFID-Sende-Feld hinein, in dem sich eine Vielzahl von RFID-Transpondern befindet,
b) Umwandeln der RFID-Sende-Strahlung in eine RFID-Transponder-Strahlung durch mindestens einen RFID-Transponder, wobei die RFID-Transponder-Strahlung RFID-Transponder-Information zu dem RFID-Transponder enthält,
c) Empfangen der RFID-Transponder-Strahlung durch mindestens eine RFID-Empfangs-Einheit,
d) Einteilen der RFID-Transponder in RFID-Transponder-Gruppen anhand der RFID-Transponder-Informationen der empfangenen RFID-Transponder-Strahlungen,
e) Auswahl eines RFID-Transponder-Gruppen-Repräsentanten mindestens einer der RFID-Transponder-Gruppen,
f) Ermitteln mindestens eines RFID-Transponder-Parameters des RFID-Transponder-Gruppen-Repräsentanten,
g) Zuordnen des RFID-Transponder-Parameters des RFID-Transponder-Gruppen-Repräsentanten zu mindestens einem weiteren Mitglied der RFID-Transponder-Gruppe des RFID-Transponder-Gruppen-Repräsentanten.

Zur Lösung der Aufgabe wird auch eine RFID-Vorrichtung zum Durchführen des RFID-Verfahrens mit
- mindestens einer RFID-Sende-Einheit zum Durchführen des Schritts a) des RFID-Verfahrens,
- mindestens einer RFID-Empfangs-Einheit zum Durchführen des Schritts c) des RFID-Verfahrens und
- mindestens einer RFID-Auswerte-Einheit zum Durchführen zumindest eines der Schritte d) bis g) des RFID-Verfahrens angegeben.

Darüber hinaus wird zur Lösung der Aufgabe ein Computerprogramm-Produkt zum Durchführen zumindest eines der Schritte d) bis g) des RFID-Verfahrens angegeben.

In einer besonderen Ausgestaltung des Verfahrens werden mindestens zwei RFID-Transponder verwendet, deren RFID-Transponder-Strahlungen gleichzeitig empfangen werden. Vorzugsweise werden für mehrere oder für alle RFID-Transponder-Gruppen RFID-Transponder-Repräsentanten ausgewählt. Die von der RFID-Empfangs-Einheit bzw. von den RFID-Empfangs-Einheiten empfangenen RFID-Transponder-Strahlungen beschränken sich auf die RFID-Strahlung des RFID-Transponder-Repräsentanten bzw. auf die RFID-Transponder-Strahlungen der RFID-Transponder-Repräsentanten. Damit gelingt es, im Vergleich zum Stand der Technik zuverlässig notwendig RFID-Daten von RFID-Transpondern zu sammeln, die sich in einem RFID-Sende-Feld befinden. Gleichzeitig kann das übertragende Daten-Volumen reduziert werden. Mit den Schritten a) bis f) wird zunächst gezielt nach einen oder mehreren RFID-Transponder-Repräsentanten für eine bzw. für mehrere RFID-Gruppen gesucht. Damit ist es möglich, trotz einer limitierten Empfangs-Bandbreite der RFID-Empfangs-Einheit die RFID-Informationen zu allen RFID-Transpondern zu sammeln, die sich im RFID-Sende-Feld befinden.

Insbesondere wird mit dem Schritt a) zumindest ein aus der Gruppe Broadcasting und Multicasting ausgewähltes Sende-Verfahren durchgeführt. Diese Sende-Verfahren zeichnen sich dadurch aus, dass die RFID-Sende-Strahlung von einer unbestimmten Gruppe von RFID-Transpondern (Broadcasting) oder von einer bestimmten Gruppe von RFID-Transpondern (Multicasting) in entsprechende RFID-Transponder-Strahlungen umgewandelt werden.

In einer weiteren Ausgestaltung wird für die RFID-Transponder-Information zumindest eine aus der Gruppe Identifizierungs-Information und Meta-Informationen ausgewählte Information verwendet. Vorzugsweise wird dabei als Meta-Information "Received Signal Strength Indication" (RSSI) verwendet.

Als Meta-Information wird insbesondere zumindest eine aus der Gruppe Ort des RFID-Transponders, Bewegungs-Richtung des RFID-Transponders und/oder Bewegungs-Geschwindigkeit des RFID-Transponders ausgewählte Information verwendet.

Der RFID-Transponder-Parameter des RFID-Transponder-Gruppen-Repräsentanten einer RFID-Transponder-Gruppe wird mindestens einem weiteren Mitglied der RFID-Transponder-Gruppe zugeordnet. In einer besonderen Ausgestaltung wird mit dem Schritt g) ein Zuordnen des RFID-Transponder-Parameters des RFID-Transponder-Gruppen-Repräsentanten zu allen Mitgliedern der RFID-Transponder-Gruppe des RFID-Transponder-Gruppen-Repräsentanten durchgeführt.

Das gesamte Verfahren oder auch nur einzelne Verfahrens-Schritte können mehrmals durchgeführt werden. In einer besonderen Ausgestaltung wird daher ein Wiederholen zumindest eines der Schritte a) bis g) durchgeführt. Dabei können die Schritte a) bis g) einzeln wiederholt werden. Mit dem Schritt a) kann beispielsweise ein Ausstrahlen mindestens einer Serie von RFID-Strahlungen (mit gleichen oder unterschiedlichen Wellenlängen) in das RFID-Sende-Feld hinein durchgeführt werden. Die Schritte a) bis g) können aber auch gemeinsam wiederholt werden. Insbesondere ist dabei denkbar, dass zum Wiederholen der Schritte ein abwechselndes Wiederholen zumindest zwei der Schritte a) bis g) durchgeführt wird. Die Schritte werden zyklisch wiederholt. Durch das Wiederholen einzelner oder mehrere Schritte des RFID-Verfahrens können noch nicht zugeordnete RFID-Transponder identifiziert und bereits bestehenden oder neu gebildeten RFID-Gruppen zugeordnet werden. Auch könnte es sein, dass aufgrund einer beschränkten Empfangs-Kapazität der RFID-Empfangs-Einheit nicht alles RFID-Transponder auf einmal gruppiert werden können. Dies macht Wiederholungen von Verfahrens-Schritten des RFID-Verfahrens notwendig.

Insbesondere wird das Verfahren so lange wiederholt, bis der Schritte g) für alle sich im Strahlungsfeld befindlichen RFID-Transponder durchgeführt worden ist.

Zur Vereinfachung des Verfahrens ist es besonders vorteilhaft, für zumindest einen der Schritte d) - g) eine künstliche Intelligenz zu verwenden.

Zusammenfassend sind mit der Erfindung folgende besonderen Vorteile verbunden:
Die RFID-Sende-Einheit ist so ausgelegt, dass durch Aussenden der RFID-Sende-Strahlung RFID-Transponder-Strahlungen mehrerer RFID-Transponder hervorgerufen werden können. Ebenso ist die RFID-Auswerte-Einheit derart ausgelegt, dass die Schritte c) bis g) für RFID-Transponder-Strahlungen der mehreren RFID-Transponder durchgeführt werden können. Mit dem RFID-Verfahren wird das zu transferierende Daten-Volumen reduziert. Gleichzeitig ist sichergestellt, dass die notwendige RFID-Transponder-Informationen zu den einzelnen RFID-Transpondern zugänglich sind. Trotz einer limitierten Empfangs-Bandbreite des RFID-Empfängers-Einheit kann die Bewegung der Mitglieder der RFID-Gruppe sicher beobachten werden. Wesentlich für dafür ist die Rolle des RFID-Transponder-Repräsentanten:
Dieser wird z.B. in der Multicast-Phase gezielt gesucht. Abwechselnd dazu wird nach bisher unbekannten RFID-Transpondern gesucht, um sowohl die Bewegungen der bekannten RFID-Gruppen zu beobachten als auch neue RFID-Transponder-Gruppen und/oder deren Mitglieder zu finden:
Anhand mehrerer Ausführungsbeispiele und der dazugehörigen Figuren wird die Erfindung im Folgenden näher beschrieben. Die Figuren schematisch und stellen keine maßstabsgetreue Abbildung dar.

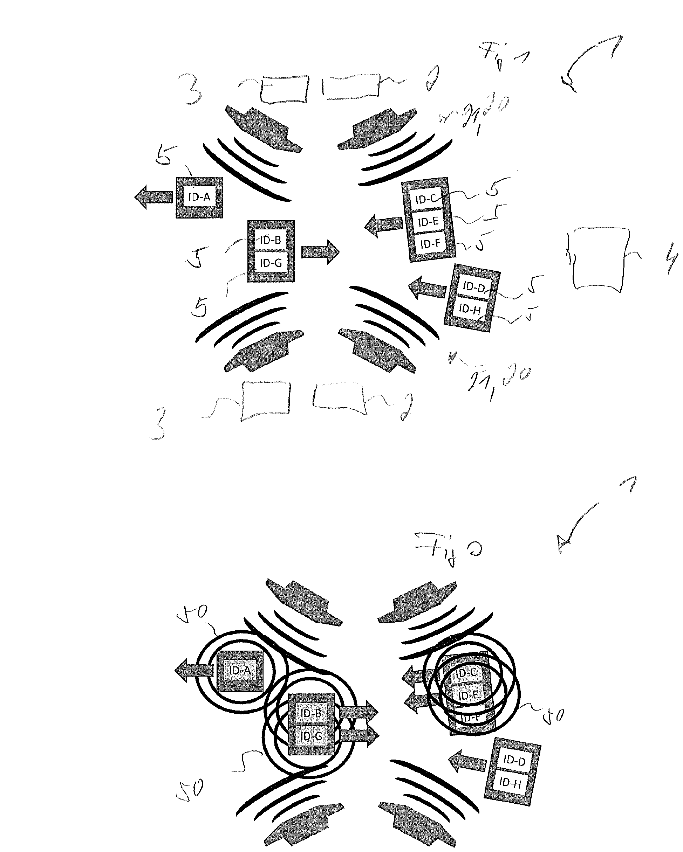

Figur 1 zeigt eine Situation, in der mehrere Pakete mit RFID-Transponder auf mehreren Vehikeln durch ein RFID-Sende-Feld transportiert werden.
Figur 2 zeigt die Situation aus Figur 1, in der mehrere RFID-Transponder RFID-Transponder-Strahlungen aussenden.

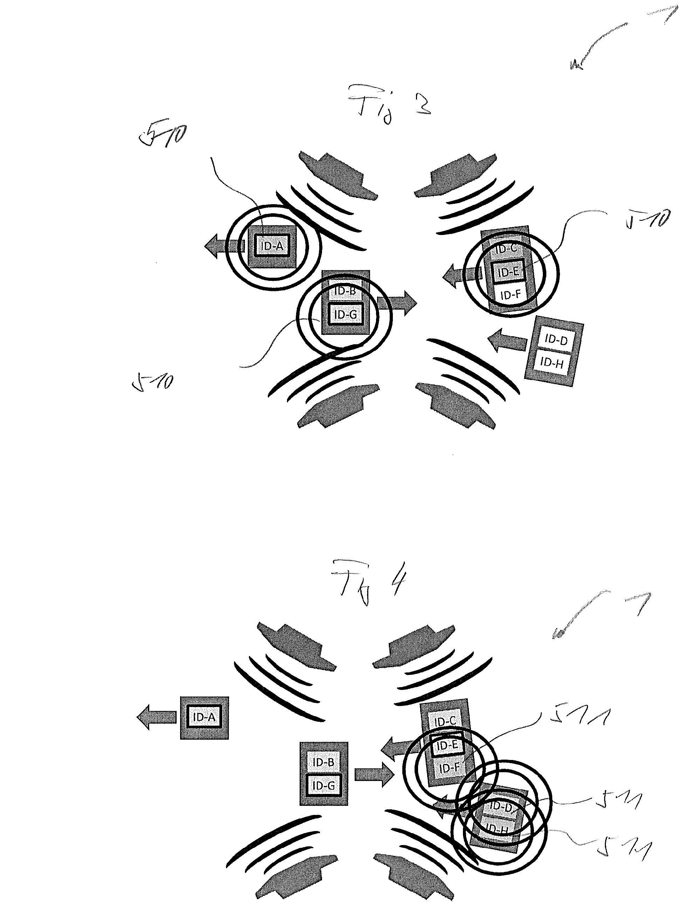

Figur 3 zeigt die Situation aus Figur 2, in der nur RFID-Transponder-Repräsentanten RFID-Transponder-Strahlungen aussenden.
Figur 4 zeigt die Situation aus Figur 2, in der nur zuvor nicht antwortende RFID-Transponder zu RFID-Antworten aufgefordert werden

Gegeben ist eine RFID-Vorrichtung 1 mit einer RFID-Sende-Einheit 2, einer RFID-Empfangs-Einheit 3 und einer RFID-Auswerte-Einheit 4. Gemäß den RFID-Verfahren werden folgende Verfahrens-Schritte durchgeführt:
a) Aussenden mindestens einer RFID-Sende-Strahlung 20 einer RFID-Sende-Einheit 2 in ein RFID-Sende-Feld 21 hinein, in dem sich eine Vielzahl von RFID-Transpondern 5 befindet,
b) Umwandeln der RFID-Sende-Strahlung 20 in eine RFID-Transponder-Strahlung 50 durch mindestens einen RFID-Transponder 5, wobei die RFID-Transponder-Strahlung 50 RFID-Transponder-Information zu dem RFID-Transponder 5 enthält,
c) Empfangen der RFID-Transponder-Strahlung 50 durch mindestens eine RFID-Empfangs-Einheit 3,
d) Einteilen der RFID-Transponder 5 in RFID-Transponder-Gruppen 51 anhand der RFID-Transponder-Informationen der empfangenen RFID-Transponder-Strahlungen 50,
e) Auswahl eines RFID-Transponder-Gruppen-Repräsentanten 510 mindestens einer der RFID-Transponder-Gruppen 51,
f) Ermitteln mindestens eines RFID-Transponder-Parameters des RFID-Transponder-Gruppen-Repräsentanten 510,
g) Zuordnen des RFID-Transponder-Parameters des RFID-Transponder-Gruppen-Repräsentanten 510 zu mindestens einem weiteren Mitglied der RFID-Transponder-Gruppe 51 des RFID-Transponder-Gruppen-Repräsentanten 510.

### Im Detail wird wie folgt vorgegangen:

Initial wird eine Serie von Broadcasts abgesetzt, die alle im RFID-Sende-Feld (Empfangsbereich) befindlichen RFID-Transponder zu einer Antwort auffordern. Nun wird abhängig von der maximalen Empfangs-Kapazität der RFID-Empfangs-Einheit (Reader) und der Gesamtanzahl der sich gerade im RFID-Sende-Feld befindlichen RFID-Transponder eine Teilmenge von RFID-Strahlungen (Transponder-Antworten) mit entsprechender RFID-Transponder-Information empfangen. Die Transponder-Information umfasst Identifizierungs-Information, Meta-Informationen in Form von RSSI sowie Informationen über den Ort (Position) und über Bewegungs-Richtung des RFID-Transponders.

Mittels künstlicher Intelligenz wird über ein Maschinen-Lern-Verfahren versucht, aus sukzessiven Messungen eine grobe Position und Bewegungs-Richtung der RFID-Transponder zu bestimmen.

In einer alternativen Ausführungsform wird anstatt des Broadcasts für diese Phase eine Multicast-Strategie verwendet werden, welche z.B. die ersten paar empfangenen Transponder via "RSSI-Whitelist-Select" selektiert und dann verfolgt, bis deren Position bestimmt werden konnte.

Sobald von einer ausreichenden Anzahl von Transpondern Positions- und Geschwindigkeits-Informationen vorliegen, werden diese in RFID-Transponder-Gruppen eingeteilt (geclustered). Es wird also bestimmt, welche RFID-Transponder sich mit hoher Wahrscheinlichkeit auf demselben Vehikel befinden. Aus diesen RFID-Transponder-Gruppen (Clustern) werden nun RFID-Transponder-Repräsentanten (Vehikel-Repräsentanten) ausgewählt. Etwa gleich viele RFID-Repräsentanten pro Vehikel, die Gesamtanzahl der Repräsentanten entspricht der maximalen Empfangskapazität der RFID-Empfangs-Einheit.

Anstatt erst die Positions- und Geschwindigkeits-Informationen pro RFID-Transponder zu extrahieren und erst diese zu clustern kann man auch die Roh-Messwerte (RSSI, Phase, etc.) aller RFID-Antworten in einen (z.B. Machine Learning) Klassifikator füttern, welcher dann für jeden RFID-Transponder bestimmt, welchem Vehikel der RFID-Transponder mit welcher Wahrscheinlichkeit zugeordnet werden kann. Ist die Wahrscheinlichkeit für ein Vehikel hoch genug, kann diese Zuordnung als gegeben angenommen werden.

Wenn die Menge der RFID-Repräsentanten größer als ein festgelegter Grenzwert ist, wird in eine "abwechselnde Repräsentanten-Tracking/Bestimmung neuer Vehikel-Cluster Mitglieder" Phase umgeschaltet. Hier wird zyklisch zwischen zwei unterschiedlichen Multicast Phasen a. und b. umgeschaltet:
a. In der Repräsentanten-Tracking Phase werden via RSSI-Select nur die Vehikel-Repräsentanten zur Antwort aufgefordert. Da die Anzahl der Vehikel-Repräsentanten der maximalen Empfangs-Kapazität der RFID-Empfangs-Einheit entspricht, ist sichergestellt, dass die RFID-Empfangs-Einheit alle potenziellen RFID-Antworten auch verarbeiten kann. So wird die Hälfte der Zeit verwendet, um anhand von möglichst vielen Datenpunkten die Bewegung der der Repräsentanten weiterzuverfolgen. Neu bestimmte Positions- und Bewegungsrichtungs-Informationen werden auf sämtliche Mitglieder RFID-Gruppe übertragen.
b. Die andere Hälfte der Zeit wird via RSSI-Blacklist Select ein Multicast durchgeführt, der alle im Empfangsbereich befindlichen RFID-Transponder zu einer RFID-Antwort auffordert, welche bisher noch keiner RFID-Gruppe (Vehikel-Cluster) zugeordnet werden konnten (die bereits zugeordneten Transponder landen also auf der "Blacklist", sie sollen explizit nicht antworten). Die Selektion ist hilfreich, um mehr Messwerte von RFID-Transpondern zu sammeln, deren Position und Bewegungsrichtung man bisher noch nicht bestimmen konnte, und damit noch keinem Vehikel Cluster zuordnen konnte. Wenn der RSSI-Aufbau keine "Blacklist-RSSI Select" unterstützt, kann anstatt dieser zweiten Select Phase auch ein normaler Broadcast durchgeführt werden, der alle RFID-Transponder zu einer RFID-Antwort auffordert. Das erhöht einerseits die Messwertdichte für die Vehikel-Repräsentanten und verringert andererseits die Wahrscheinlichkeit, neue Vehikel-Cluster Mitglieder zu bestimmen.

Transponder, deren Position und Bewegungsrichtung über mehrere Blacklist-Multicasts oder Broadcasts bestimmt werden konnten, werden nun ebenfalls mit geclustered und bei der Bestimmung neuer Vehikel Repräsentanten berücksichtigt (z.B. wenn neue Vehikel in den Empfangsbereich einfahren) bzw. die Positions- und Richtungsinformationen bestehender Vehikel-Repräsentanten zukünftig auf alle Mitglieder des entsprechenden Vehikel-Clusters übertragen

Sobald die Anzahl der Vehikel-Repräsentanten unter einen Grenzwert fällt, wird wieder in die ausschließlich Broadcast-Phase umgeschaltet, bis wieder genügend Cluster Repräsentanten gefunden wurden.

## Patentansprüche

1. RFID-Verfahren mit folgenden Verfahrens-Schritten:
a) Aussenden mindestens einer RFID-Sende-Strahlung (20) einer RFID-Sende-Einheit (2) in ein RFID-Sende-Feld (21) hinein, in dem sich eine Vielzahl von RFID-Transpondern (5) befindet,
b) Umwandeln der RFID-Sende-Strahlung (20) in eine RFID-Transponder-Strahlung (50) durch mindestens einen RFID-Transponder (5), wobei die RFID-Transponder-Strahlung (50) RFID-Transponder-Information zu dem RFID-Transponder (5) enthält,
c) Empfangen der RFID-Transponder-Strahlung (50) durch mindestens eine RFID-Empfangs-Einheit (3),
d) Einteilen der RFID-Transponder (5) in RFID-Transponder-Gruppen (51) anhand der RFID-Transponder-Informationen der empfangenen RFID-Transponder-Strahlungen (50),
e) Auswahl eines RFID-Transponder-Gruppen-Repräsentanten (510) mindestens einer der RFID-Transponder-Gruppen (51),
f) Ermitteln mindestens eines RFID-Transponder-Parameters des RFID-Transponder-Gruppen-Repräsentanten (510),
g) Zuordnen des RFID-Transponder-Parameters des RFID-Transponder-Gruppen-Repräsentanten (510) zu mindestens einem weiteren Mitglied der RFID-Transponder-Gruppe (51) des RFID-Transponder-Gruppen-Repräsentanten (510).

2. RFID-Verfahren nach Anspruch 1, wobei mindestens zwei RFID-Transponder verwendet werden, deren RFID-Transponder-Strahlungen gleichzeitig empfangen werden.

3. RFID-Verfahren nach Anspruch 1 oder 2, wobei mit dem Schritt a) zumindest ein aus der Gruppe Broadcasting und Multicasting ausgewähltes Sende-Verfahren durchgeführt wird.

4. RFID-Verfahren nach einem der Ansprüche 1 bis 3, wobei für die RFID-Transponder-Information zumindest eine aus der Gruppe Identifizierungs-Information und Meta-Information ausgewählte Information verwendet wird.

5. RFID-Verfahren nach Anspruch 4, wobei als Meta-Information Received Signal Strength Indication verwendet wird.

6. RFID-Verfahren nach Anspruch 4 oder 5, wobei als Meta-Informationen zumindest eine aus der Gruppe Ort des RFID-Transponders, Bewegungs-Richtung des RFID-Transponders und/oder Bewegungs-Geschwindigkeit des RFID-Transponders ausgewählte Information verwendet wird.

7. RFID-Verfahren nach einem der Ansprüche 1 bis 6, wobei mit dem Schritt g) ein Zuordnen des RFID-Transponder-Parameters des RFID-Transponder-Gruppen-Repräsentanten zu allen Mitgliedern der RFID-Transponder-Gruppe des RFID-Transponder-Gruppen-Repräsentanten durchgeführt wird.

8. RFID-Verfahren nach einem der Ansprüche 1 bis 7, wobei ein Wiederholen zumindest eines der Schritte a) bis g) durchgeführt wird.

9. RFID-Verfahren nach Anspruch 8, wobei zum Wiederholen ein abwechselndes Wiederholen zumindest zwei der Schritte a) bis g) durchgeführt wird.

10. RFID-Verfahren nach einem der Ansprüche 1 bis 9, wobei das Verfahren so lange wiederholt wird, bis der Schritte g) für alle sich im Strahlungsfeld befindlichen RFID-Transponder durchgeführt worden ist.

11. RFID-Verfahren nach einem der Ansprüche 1 bis 10, wobei zumindest für einen der Schritte d) - g) eine künstliche Intelligenz verwendet wird.

12. RFID-Vorrichtung (1) zum Durchführen eines RFID-Verfahrens nach einem der Ansprüche 1 bis 11 mit
- mindestens einer RFID-Sende-Einheit (2) zum Durchführen des Schritts a) des RFID-Verfahrens,
- mindestens einer RFID-Empfangs-Einheit (3) zum Durchführen des Schritts c) des RFID-Verfahrens und
- mindestens einer RFID-Auswerte-Einheit (4) zum Durchführen zumindest eines der Schritte d) bis g) des RFID-Verfahrens.

13. RFID-Vorrichtung nach Anspruch 12, wobei die RFID-Sende-Einheit so ausgelegt ist, dass durch Aussenden der RFID-Sende-Strahlung RFID-Transponder-Strahlungen mehrerer RFID-Transponder hervorgerufen werden können.

14. RFID-Vorrichtung nach Anspruch 13, wobei die RFID-Auswerte-Einheit so ausgelegt ist, dass die Schritte c) bis g) für RFID-Transponder-Strahlungen die mehreren RFID-Transponder durchgeführt werden können.

15. Computerprogramm-Produkt zum Durchführen zumindest eines der Schritte d) bis g) eines RFID-Verfahrens nach einem der Ansprüche 1 bis 11.
